# EUROPEAN PATENT SPECIFICATION

(11) **EP 1 828 668 B1**
(45) Date of publication and mention of the grant of the patent: **31.12.2014**
(21) Application number: 05810636.0
(22) Date of filing: 30.11.2005
(51) Int. Cl.: F16M 13/02, A62C 13/78

(54) **ADJUSTABLE BRACKET**
VERSTELLBARER HALTER
SUPPORT REGLABLE

(30) Priority: 30.11.2004 AU 2004906814
(43) Date of publication of application: 05.09.2007
(73) Proprietor: Wilroof Products (WA) PTY Ltd., Bayswater, Perth, WA 6933 (AU)
(72) Inventor: LARMONT, James, Bayswater, Perth, WA 6933 (AU)
(74) Representative: Office Freylinger
(86) International application number: PCT/AU2005/001797
(87) International publication number: WO 2006/058366

(56) References cited:
- WO-A1-90/04127
- US-A- 3 226 069
- US-A- 3 894 707
- US-A- 4 066 233
- US-A- 4 695 019

## Description

### FIELD OF THE INVENTION

The present invention relates to an adjustable bracket.

### BACKGROUND TO THE INVENTION

It is known to attach and secure vessels, such as oxygen tanks and fire extinguishers, to a surface such as a wall. One known means of attaching vessels includes a hook member extending outwardly from the surface, onto which the vessel may be hung. These types of attachment means do not, however, secure the vessel onto the surface. Consequently, the vessel may be permitted to swing from the hook and potentially become detached.

Other types of attachment means that are able to secure the vessel, are generally suited for securing vessels that are of a fixed size, particularly of a fixed diameter. Such attachment means are unable to be adjusted to accommodate the securing of different vessels having differing dimensions.

US patent 3,894,707 discloses a mounting device for securing a sign to a post. The mounting device comprises a channel member attached to the rear surface of the sign and having a rearwardly directed mouth with inwardly turned lips which constrict the mouth. The mounting device which comprises a flexible strap of stainless steel which passes around the post and is attached at its ends to the channel by means of toggle-shaped attachment members respectively. Each attachment member is made from flat stainless steel sheet and has a constricted neck currying an enlarged head at the sides of which are oppositely projecting ears. This toggle-end is adapted to be inserted into the channel member so that the ears engage under the lips and prevent its withdrawal.

Another mounting device for securing a sign to a post is disclosed in US patent 4,066,233 which discloses an adjustable bracket according to the preamble of claim 1. This mounting device comprises a pair of attachment members, which are mounted on a saddle shaped to seat against the post. The attachment members are loosely carried at opposite ends of the saddle and each is slotted to take a strap to be passed and tightened around the post. The attachment members have stems projecting from the saddle and carrying abutment means, to be inserted into a channel mounted at the back of a sign. When the strap is tightened, the inwardly extending upper flanges of the channel, which are located between the abutment means and the saddle, are gripped and secured thereby.

The present invention attempts to overcome at least in part the aforementioned disadvantages of previous vessel attachment means.

### SUMMARY OF THE INVENTION

In accordance with one aspect of the present invention there is provided an adjustable bracket for securing a vessel to a surface, the adjustable bracket comprising at least two slidable portions and a receiving track, the receiving track arranged to be mounted on the surface, each slidable portion including a track engaging portion and an outwardly extending portion, the track engaging portion being arranged to engage slidably with the receiving track and each outwardly extending portion being arranged to engage a flexible member, wherein, in use, the slidable portions are positioned adjacent opposing sides of a vessel and the flexible members are fastened around the vessel, whereby tension in the flexible members causes the slidable portions to be held in place upon the receiving track by friction. The adjustable bracket according to the present invention is defined by the appended claims 1-10.

### DESCRIPTION OF THE DRAWINGS

The present invention will now be described, by way of example only, with reference to the accompanying drawings, in which:
Figure 1 is a perspective view of an adjustable bracket in accordance with one embodiment of the present invention;
Figure 2 is a lower perspective view of a slidable portion of the adjustable bracket of Figure 1;
Figure 3 is a cross section view of the adjustable bracket of Figure 1; and
Figure 4 is a perspective view of a second embodiment of the present invention.

### DESCRIPTION OF AN EMBODIMENT OF THE INVENTION

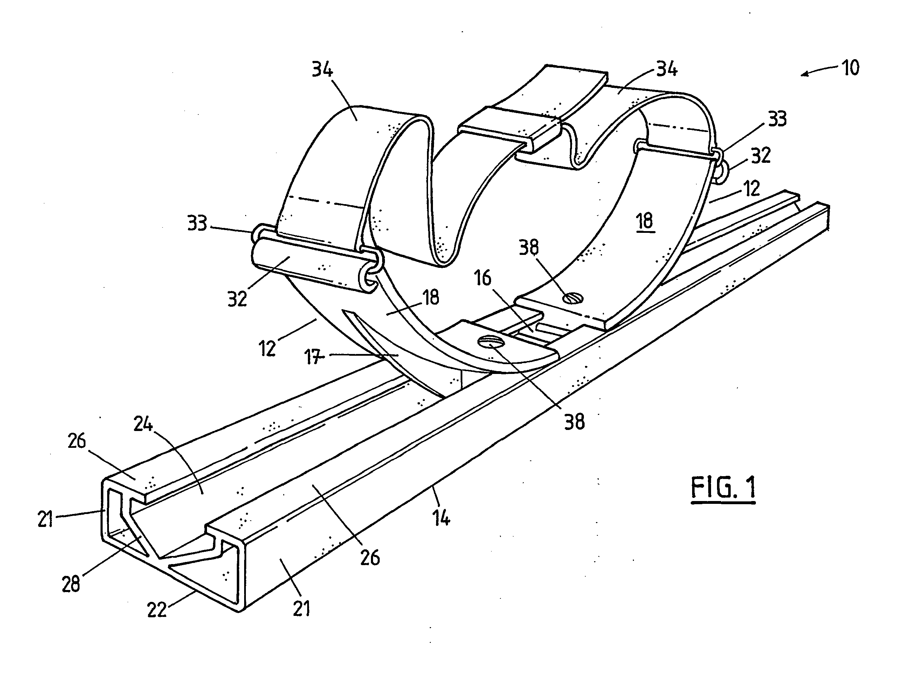

Referring initially to Figures 1 to 3, there is shown an adjustable bracket 10 for securing vessels of differing dimensions, the adjustable bracket 10 comprising a pair of slidable portions 12 slidably engaged upon a receiving track 14. The slidable portions 12 are movable relative to each other along the receiving track 14 so as to accommodate different vessels having differing dimensions, particularly of differing diameter.

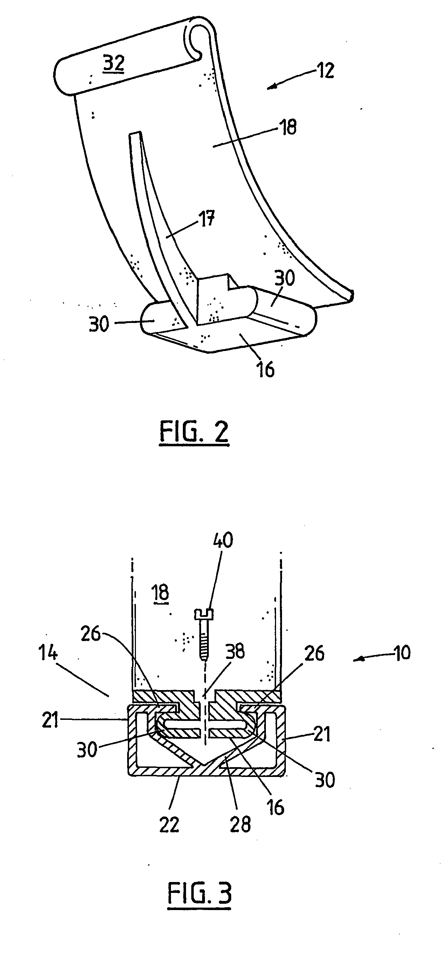

The receiving track 14 comprises an elongate, substantially C-shaped member having a base 22 and a pair of opposing side walls 21 arranged to define a longitudinal channel 24. The longitudinal channel 24 has a pair of inwardly extending flanges 26 extending from an upper edge of each of the opposing side walls 21, as shown in Figure 1. The flanges 26 each extend inwardly towards each other such that there is a gap between inner ends of the flanges 26. In the embodiment shown in Figures 1 and 3, a substantially V-shaped support 28 extends upwardly from the base 22 and generally towards the flanges 26.

The receiving track 14 may be suitably mounted upon any surface, such as a vertical wall, to which it is desired to secure the vessel. Any number of receiving tracks 14 may be mounted upon the surface and aligned in parallel to better accommodate the securing of long vessels.

Each slidable portion 12 includes a track engaging portion 16 arranged to slidably engage with the receiving track 14. Each slidable portion 12 also includes an outwardly extending portion 18. Optionally, a bore 38 extends from an upper surface of the outwardly extending portion 18 and through the track engaging portion 16. The bore 38 is arranged to receive a fastening means 40, such as a screw. The fastening means 40 is provided to engage with the receiving track 14, so that each slidable portion 12 may be fixed in a desired position upon the receiving track 14.

The track engaging portion 16 comprises a pair of laterally extending lugs 30 disposed below the outwardly extending portion 18. The lugs 30 are arranged to be received by the channel 24 of the receiving track 14 and be held therein by the inwardly extending flanges 26.

The outwardly extending portion 18 of each slidable portion 12 projects generally upwardly from the laterally extending lugs 30 and away from the channel 24. The outwardly extending portion 18 is disposed, in use, externally of the channel 24 and adjacent a top surface of each of the flanges 26. A lower surface of the outwardly extending portion 18 is arranged, in use, to contact the top surface of each of the flanges 26, shown in Figure 1.

In the first embodiment, shown in Figures 1 and 2, the outwardly extending portion 18 comprises a generally curved member, curving upwardly and away from the track engaging portion 16. Each curved member extends outwardly in general alignment with the receiving track 14. The curved configuration of the outwardly extending portion 18 of this embodiment is particularly suited for the securing of vessels that are cylindrical in shape.

In this embodiment, the curved member has a bracing portion 17. The bracing portion 17 is arranged to extend upwardly along a lower surface of the curved member from the track engaging portion 16. The bracing portion 17 is provided to add extra strength and support to the outwardly extending portion 18.

It should be understood, however, that the outwardly extending portion 18 may be provided in any shape or configuration as desired or necessary. For example, it may be desired to secure a vessel that is substantially rectangular in configuration. In such an instance, it is preferred that the outwardly extending portion 18 be provided as a substantially square or rectangular member.

The outwardly extending portion 18 is provided with an engaging portion 32 at an end remote from the channel 24. In the embodiment shown in Figure 1, the engaging portion 32 comprises an inwardly curved portion. However, the engaging portion 32 may alternatively comprise an aperture.

The engaging portion 32 is has a flexible member 34 in the form of a strap attached thereto. Preferably, each outwardly extending portion 18 of each slidable portion 12 has a flexible member 34 attached thereto. However, a single flexible member 34, fastenable to both engaging portions 32 of the slidable portions 12 may be used instead.

The or each flexible member 34 may be attached to a respective engaging portion 32 by a coupling portion 33. Preferably, the coupling portion 33 comprises a metal ring which engages around the engaging portion 32 and to which an end of a respective flexible member 34 is attached, as shown in Figure 1.

The flexible members 34 of each slidable portion 12 are arranged, in use, to be placed about the vessel. The flexible members 34 are fastenable to each other. The flexible members 34 may be fastened by any suitable means that permits tensioning of the flexible members 34 about the vessel, such as a buckle or the like.

Tensioning of the flexible members 34 causes the track engaging portions 16 to exert a force against a lower surface of the flanges 26 of the receiving track. Tensioning of the flexible members 34 also causes the vessel to exert a force upon an upper surface of the outwardly extending portions 18. This in turn causes a lower surface of the outwardly extending portion 18 to exert a force upon the upper surface of each flange 26. In this manner, the slidable portions 12 are held in place upon the receiving track 14 by friction, thereby also retaining the vessel in position.

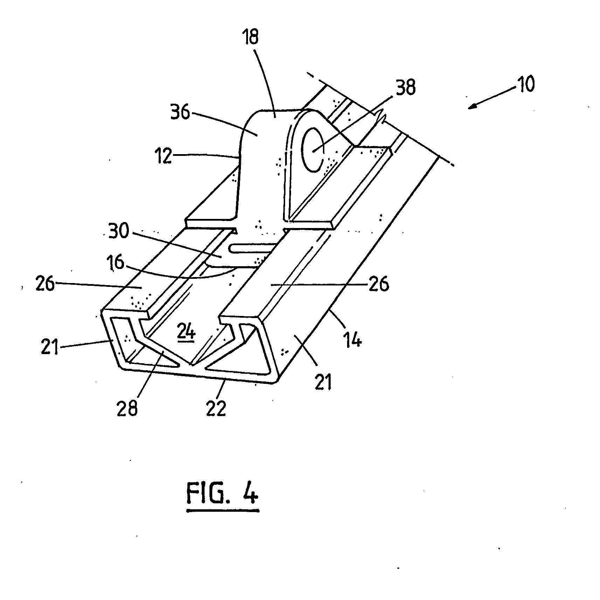

A second embodiment of the slidable portion 12 of the present invention is shown in Figure 4. This embodiment is particularly suited for securing vessels that have a considerable weight and cannot be adequately supported by the curved configuration of the outwardly extending portions 18 of the first embodiment. In this embodiment, the outwardly extending portions 18 of the slidable portions 12 each comprise a lug 36 having an aperture 38 therein. The lug 36 is disposed outwardly from the channel 24 and is generally perpendicular to the laterally extending lugs 30 of the track engaging portion 16.

The aperture 38 is arranged to receive a flexible member 34, such as a chain, which is placed about the vessel. The flexible member 34 is arranged, in use, to be placed about the vessel, tensioned and fastened.

In use, the vessel that is to be secured by the adjustable bracket 10 is placed adjacent the receiving track 14, between the two slidable portions 12. The slidable portions 12 are slidably moved relative to each other upon the receiving track 14 to a position adjacent opposing sides of the vessel. Optionally, each slidable portion 12 may be fixed in this position upon the receiving track 14 by insertion of the fastening means 40 through the bore 40.

The flexible member 34 is then engaged with the engaging portion 32 of at least one of the outwardly extending portions 18, and placed about the vessel. The flexible member 34 is then tensioned to secure the vessel, and appropriately fastened. Fastening may be achieved by fastening to the second flexible member 34, attached to the opposing outwardly extending portion 18, or by engagement with the engaging portion 32 of the opposing outwardly extending portion 18.

In the second embodiment, the flexible member 34 is engaged with the aperture 38 of at least one of the lugs 36. The flexible member 34 is placed about the vessel and tensioned. The flexible member 34 is then appropriately fastened, substantially as described with respect to the first embodiment.

Tensioning and fastening of the or each flexible member 34 causes the appropriate force to be applied upon upper and lower surfaces of the flanges 26 by the outwardly extending portions 18 and track engaging portions 14 respectively. In this manner, the vessel is secured to the surface upon which the or each receiving track 14 is mounted.

Modifications and variations as would be apparent to a skilled addressee are deemed to be within the scope of the present invention, which is defined by the appended claims.

## Claims

1. An adjustable bracket (10) for securing a vessel to a surface, the adjustable bracket (10) comprising a receiving track (14), the receiving track (14) being arranged to be mounted on the surface, wherein the receiving track (14) has a pair of opposing side walls (21) defining a longitudinal channel (24), the longitudinal channel (24) having a respective inwardly extending flange (26) extending from an upper edge of each of the opposing side walls (21), the flanges (26) having upper and lower surfaces, a slidable portion (12) having a track engaging portion (16) and an outwardly extending portion (18), the outwardly extending portion (18) having an upper and a lower surface, the track engaging portion (16) being engaged slidably with the inwardly extending flanges (26) of the receiving track (14) and the outwardly extending portion (18) being engaged with a flexible member (34) arranged to extend around a vessel to be secured, the adjustable bracket (10) comprises at least two of the slidable portions (12) which are mounted on the receiving track (14), the slidable portions (12) being slidably movable relative to one another on the track (14), the flexible member (34) being connected to respective outwardly extending portions (18) so that the slidable portions (12) are interconnected by the flexible member (34), wherein in use the flexible member (34) extends around the vessel, **characterised in that**, tensioning of the flexible member (34) causes the track engaging portions (16) to exert a force against the lower surface of the flanges (26) so that the outer surface of the vessel comes into contact with the respective upper surfaces of the outwardly extending portions (18) causing the respective lower surfaces of the outwardly extending portions (18) to exert a force on the upper surface of the flanges (26), thereby causing the slidable portions (12) to be held in place upon the receiving track (14) by friction.

2. An adjustable bracket (10) according to claim 1, **characterised in that** the receiving track (14) has a base (22) between the opposing side walls (21), arranged to define a longitudinal channel (24), and the track engaging portion (16) of each slidable portion (12) includes a pair of laterally extending lugs (30), wherein the lugs are arranged to be received by the channel (24) and be held therein by the inwardly extending flanges (26).

3. An adjustable bracket (10) according to anyone of the preceding claims, **characterised in that** the outwardly extending portion (18) has an engaging portion (32) at an end thereof remote from the channel, the engaging portion (32) being arranged to engage a flexible member (34).

4. An adjustable bracket (10) according to claim 3, **characterised in that** the engaging portion (32) comprises an inwardly curved portion arranged to engage a flexible member (34).

5. An adjustable bracket (10) according to claim 3 or 4, **characterised in that** the outwardly extending portion (18) includes a generally curved member, the curved member curving upwardly and away from the track engaging portion (16) and extending outwardly in general alignment with the receiving track (14).

6. An adjustable bracket (10) according to anyone of claims 1 to 2, **characterised in that** the outwardly extending portion (18) of each slidable portion (12) comprises a lug (36), the lug (36) being disposed outwardly from the channel (24) and generally perpendicularly to the lugs (30) of the track engaging portion (16).

7. An adjustable bracket (10) according to claim 6, **characterised in that** the lug (36) of the outwardly extending portion (18) is provided with an aperture (38), the aperture (38) being arranged to receive the flexible member (34).

8. An adjustable bracket (10) according to claim 5, **characterised in that** the generally curved member of the outwardly extending portion (18) has a lower surface, the lower surface having a bracing portion (17) extending upwardly along the lower surface to provide additional strength and support to the outwardly extending portion (18).

9. An adjustable bracket (10) according to claim 5 or 6, **characterised in that** each slidable portion (12) has a bore (38) extending from an upper surface of the outwardly extending portion (18) and through the track engaging portion (16), the bore (38) being arranged to receive a fastening means to enable each slidable portion (12) to be fixed in a position upon the receiving track (14) by engagement of the fastening means with the receiving track (14).

10. An Adjustable bracket (10) according to any one of the preceding claims, **characterised in that** two or more substantially parallel receiving tracks (14) are provided upon a surface.

## Patentansprüche

1. Verstellbare Montagehalterung (10) zum Befestigen eines Behälters an einer Fläche, wobei die verstellbare Montagehalterung (10) eine Aufnahmeschiene (14) umfasst, wobei die Aufnahmeschiene (14) dafür ausgelegt ist, auf der Fläche montiert zu werden, wobei die Aufnahmeschiene (14) ein Paar gegenüberliegender Seitenwände (21) aufweist, die einen in Längsrichtung verlaufenden Kanal (24) definieren, wobei der in Längsrichtung verlaufende Kanal (24) einen jeweiligen sich nach innen erstreckenden Flansch (26) aufweist, der sich von einer Oberkante einer jeden der gegenüberliegenden Seitenwände (21) erstreckt, wobei die Flansche (26) Ober- und Unterseiten aufweisen, wobei ein gleitfähiger Abschnitt (12) einen Schieneneingriffnahmeabschnitt (16) und einen sich nach außen erstreckenden Abschnitt (18) aufweist, wobei der sich nach außen erstreckende Abschnitt (18) eine Ober- und eine Unterseite aufweist, wobei der Schieneneingriffnahmeabschnitt (16) gleitfähig mit den sich nach innen erstreckenden Flanschen (26) der Aufnahmeschiene (14) im Eingriff steht und der sich nach außen erstreckende Abschnitt (18) mit einem flexiblen Element (34) im Eingriff steht, das dafür ausgelegt ist, sich um einen zu befestigenden Behälter herum zu erstrecken, wobei die verstellbare Montagehalterung (10) mindestens zwei der gleitfähigen Abschnitte (12) umfasst, die an der Aufnahmeschiene (14) montiert sind, wobei die gleitfähigen Abschnitte (12) relativ zueinander gleitfähig auf der Schiene (14) bewegt werden können, wobei das flexible Element (34) mit jeweiligen sich nach außen erstreckenden Abschnitten (18) verbunden ist, so dass die gleitfähigen Abschnitte (12) durch das flexible Element (34) miteinander verbunden sind, wobei sich das flexible Element während des Gebrauchs (34) um den Behälter herum erstreckt, **dadurch gekennzeichnet, dass** das Spannen des flexiblen Elements (34) die Schieneneingriffnahmeabschnitte (16) veranlasst, eine Kraft gegen die Unterseite der Flansche (26) auszuüben, so dass die Außenfläche des Behälters in Kontakt mit den jeweiligen Oberseiten der sich nach außen erstreckenden Abschnitte (18) kommt, wodurch die jeweiligen Unterseiten der sich nach außen erstreckenden Abschnitte (18) eine Kraft auf die Oberseite der Flansche (26) ausüben, wodurch bewirkt wird, dass die gleitfähigen Abschnitte (12) durch Reibung an ihrem Platz auf der Aufnahmeschiene (14) gehalten werden.

2. Verstellbare Montagehalterung (10) nach Anspruch 1, **dadurch gekennzeichnet, dass** die Aufnahmeschiene (14) eine Basis (22) zwischen den gegenüberliegenden Seitenwänden (21) ausweist, die dafür ausgelegt ist, einen in Längsrichtung verlaufenden Kanal (24) zu definieren, und der Schieneneingriffnahmeabschnitt (16) jedes gleitfähigen Abschnitts (12) ein Paar sich seitlich erstreckender Nasen (30) umfasst, wobei die Nasen dafür ausgelegt sind, durch den Kanal (24) aufgenommen zu werden und durch die sich nach innen erstreckenden Flansche (26) darin gehalten zu werden.

3. Verstellbare Montagehalterung (10) nach einem der vorangehenden Ansprüche, **dadurch gekennzeichnet, dass** der sich nach außen erstreckende Abschnitt (18) einen Eingriffnahmeabschnitt (32) an seinem dem Kanal abgelegenen Ende aufweist, wobei der Eingriffnahmeabschnitt (32) dafür ausgelegt ist, ein flexibles Element (34) in Eingriff zu nehmen.

4. Verstellbare Montagehalterung (10) nach Anspruch 3, **dadurch gekennzeichnet, dass** der Eingriffnahmeabschnitt (32) einen nach innen gekrümmten Abschnitt umfasst, der dafür ausgelegt ist, ein flexibles Element (34) in Eingriff zu nehmen.

5. Verstellbare Montagehalterung (10) nach Anspruch 3 oder 4, **dadurch gekennzeichnet, dass** der sich nach außen erstreckende Abschnitt (18) ein allgemein gekrümmtes Element umfasst, wobei sich das gekrümmte Element aufwärts und von dem Schieneneingriffnahmeabschnitt (16) fort krümmt und sich auswärts in allgemeiner Ausrichtung auf die Aufnahmeschiene (14) erstreckt.

6. Verstellbare Montagehalterung (10) nach einem der Ansprüche 1 und 2, **dadurch gekennzeichnet, dass** der sich nach außen erstreckende Abschnitt (18) jedes gleitfähigen Abschnitts (12) eine Nase (36) umfasst, wobei die Nase (36) von dem Kanal (24) auswärts und allgemein senkrecht zu den Nasen (30) des Schieneneingriffnahmeabschnitts (16) angeordnet ist.

7. Verstellbare Montagehalterung (10) nach Anspruch 6, **dadurch gekennzeichnet, dass** die Nase (36) des sich nach außen erstreckenden Abschnitts (18) mit einer Öffnung (38) versehen ist, wobei die Öffnung (38) dafür ausgelegt ist, das flexible Element (34) aufzunehmen.

8. Verstellbare Montagehalterung (10) nach Anspruch 5, **dadurch gekennzeichnet, dass** das allgemein gekrümmte Element des sich nach außen erstreckenden Abschnitts (18) eine Unterseite aufweist, wobei die Unterseite einen Aussteifungsabschnitt (17) aufweist, der sich aufwärts entlang der Unterseite erstreckt, um zusätzliche Festigkeit und Stützung für den sich nach außen erstreckenden Abschnitt (18) bereitzustellen.

9. Verstellbare Montagehalterung (10) nach Anspruch 5 oder 6, **dadurch gekennzeichnet, dass** jeder gleitfähige Abschnitt (12) eine Bohrung (38) aufweist, die sich von einer Oberseite des sich nach außen erstreckenden Abschnitts (18) und durch den Schieneneingriffnahmeabschnitt (16) hindurch erstreckt, wobei die Bohrung (38) dafür ausgelegt ist, ein Befestigungsmittel aufzunehmen, um es zu ermöglichen, dass jeder gleitfähige Abschnitt (12) in einer Position auf der Aufnahmeschiene (14) durch Eingriffnahme des Befestigungsmittels mit der Aufnahmeschiene (14) fixiert wird.

10. Verstellbare Montagehalterung (10) nach einem der vorangehenden Ansprüche, **dadurch gekennzeichnet, dass** zwei oder mehr im Wesentlichen parallele Aufnahmeschienen (14) auf einer Fläche angeordnet sind.

## Revendications

1. Support (10) réglable pour fixer un récipient sur une surface, le support (10) réglable comprenant un rail (14) de réception, le rail (14) de réception étant agencé de façon à être monté sur la surface, dans lequel le rail (14) de réception a une paire de parois (21) latérales en opposition définissant un canal (24) longitudinal, le canal (24) longitudinal ayant un rebord (26) respectif s'étendant vers l'intérieur s'étendant à partir d'un bord supérieur de chacune des parois (21) latérales en opposition, les rebords (26) ayant des surfaces supérieure et inférieure, une partie (12) coulissante ayant une partie (16) d'emboîtement de rail et une partie (18) s'étendant vers l'extérieur, la partie (18) s'étendant vers l'extérieur ayant une surface supérieure et une surface inférieure, la partie (16) d'emboîtement de rail étant engagée de manière coulissante avec les rebords (26) s'étendant vers l'intérieur du rail (14) de réception et la partie (18) s'étendant vers l'extérieur étant engagée avec un élément (34) flexible agencé de façon à s'étendre autour d'un récipient devant être fixé, le support (10) réglable comprend au moins deux des parties (12) coulissantes qui sont montées sur le rail (14) de réception, les parties (12) coulissantes étant mobiles en coulissement l'une par rapport à l'autre sur le rail (14), l'élément (34) flexible étant connecté à des parties (18) respectives s'étendant vers l'extérieur de sorte que les parties (12) coulissantes sont interconnectées par l'élément (34) flexible, dans lequel, à l'utilisation, l'élément (34) flexible s'étend autour du récipient, **caractérisé en ce qu**'une mise en tension de l'élément (34) flexible fait que les parties (16) d'emboîtement de rail exercent une force contre la surface inférieure des rebords (26) de sorte que la surface extérieure du récipient vient en contact avec les surfaces supérieures respectives des parties (18) s'étendant vers l'extérieur, faisant que les surfaces inférieures respectives des parties (18) s'étendant vers l'extérieur exercent une force sur la surface supérieure des rebords (26), faisant ainsi que les parties (12) coulissantes sont maintenues en place sur le rail (14) de réception par frottement.

2. Support (10) réglable selon la revendication 1, **caractérisé en ce que** le rail (14) de réception a une base (22) entre les parois (21) latérales en opposition, agencées pour définir un canal (24) longitudinal, et la partie (16) d'emboîtement de rail de chaque partie (12) coulissante inclut une paire de tourillons (30) s'étendant latéralement, dans lequel les tourillons sont agencés de façon à être reçus par le canal (24) et à être maintenus dans celui-ci par les rebords (26) s'étendant vers l'intérieur.

3. Support (10) réglable selon l'une quelconque des revendications précédentes, **caractérisé en ce que** la partie (18) s'étendant vers l'extérieur a une partie (32) d'emboîtement à une extrémité de celle-ci distante du canal, la partie (32) d'emboîtement étant agencée pour emboîter un élément (34) flexible.

4. Support (10) réglable selon la revendication 3, **caractérisé en ce que** la partie (32) d'emboîtement comprend une partie incurvée vers l'intérieur agencée pour emboîter un élément (34) flexible.

5. Support (10) réglable selon la revendication 3 ou 4, **caractérisé en ce que** la partie (18) s'étendant vers l'extérieur inclut un élément de manière générale incurvé, l'élément incurvé s'incurvant vers le haut et à l'écart de la partie (16) d'emboîtement de rail et s'étendant vers l'extérieur en alignement général avec le rail (14) de réception.

6. Support (10) réglable selon l'une quelconque des revendications 1 à 2, **caractérisé en ce que** la partie (18) s'étendant vers l'extérieur de chaque partie (12) coulissante comprend un tourillon (36), le tourillon (36) étant disposé vers l'extérieur par rapport au canal (24) et de manière générale perpendiculairement aux tourillons (30) de la partie (16) d'emboîtement de rail.

7. Support (10) réglable selon la revendication 6, **caractérisé en ce que** le tourillon (36) de la partie (18) s'étendant vers l'extérieur est prévu avec une ouverture (38), l'ouverture (38) étant agencée de façon à recevoir l'élément (34) flexible.

8. Support (10) réglable selon la revendication 5, **caractérisé en ce que** l'élément de manière générale incurvé de la partie (18) s'étendant vers l'extérieur a une surface inférieure, la surface inférieure ayant une partie (17) de renfort s'étendant vers le haut le long de la surface inférieure pour offrir une résistance et un support additionnels à la partie (18) s'étendant vers l'extérieur.

9. Support (10) réglable selon la revendication 5 ou 6, **caractérisé en ce que** chaque partie (12) coulissante a un alésage (38) s'étendant à partir d'une surface supérieure de la partie (18) s'étendant vers l'extérieur et à travers la partie (16) d'emboîtement de rail, l'alésage (38) étant agencé de façon à recevoir un moyen de fixation pour permettre que chaque partie (12) coulissante soit fixée dans une position sur le rail (14) de réception par engagement du moyen de fixation avec le rail (14) de réception.

10. Support (10) réglable selon l'une quelconque des revendications précédentes, **caractérisé en ce que** deux rails (14) de réception sensiblement parallèles ou plus sont prévus sur une surface.
